# EUROPEAN PATENT APPLICATION

(11) **EP 4 382 496 A1**
(43) Date of publication of application: **12.06.2024**
(21) Application number: 22852928.5
(22) Date of filing: 27.07.2022
(51) Int. Cl.: C03C 17/30, C09D 5/14, C09K 3/18

(54) **GLASS MEMBER AND PRODUCTION METHOD THEREFOR**

(30) Priority: 02.08.2021 JP 2021127018
(71) Applicant: NIPPON SHEET GLASS COMPANY, LIMITED, Tokyo 108-6321 (JP)
(72) Inventor: IWAI, Nobuki, Tokyo 108-6321 (JP); KAMITANI, Kazutaka, Tokyo 108-6321 (JP)
(74) Representative: Hasegawa, Kan
(86) International application number: PCT/JP2022/029003
(87) International publication number: WO 2023/013505

(57) **Abstract**

A glass member according to the present invention comprises: a glass plate having a first surface and a second surface; and a functional film that is formed on the first surface and composed of a single film, wherein the functional film contains a composition having a fluoroalkyl group and mainly disposed near the surface of the functional film, antibacterial metal ions, and a carrier containing an inorganic oxide constituting a three-dimensional network bond.

## Description

### TECHNICAL FIELD

The present invention relates to a glass member and a method for producing the glass member.

### BACKGROUND ART

Patent Document 1 discloses a glass in which an antibacterial substance is provided on a surface of a glass plate by ion exchange of an antibacterial ion component.

### PRIOR ART DOCUMENT

### PATENT DOCUMENT

Patent Document 1: Japanese Patent Laid-open Publication No. H11-228186

### SUMMARY OF THE INVENTION

### PROBLEMS TO BE SOLVED BY THE INVENTION

In recent years, a film to which functions such as water repellency are added in addition to antibacterial performance is required. However, to produce such a film having a plurality of functions, it is necessary to laminate a plurality of films for each function, and there is a problem that production becomes complicated. The present invention has been made to solve this problem, and an object of the present invention is to provide a glass member having a functional film that exhibits a plurality of functions in the form of a single film, and a method for producing the glass member.

### MEANS FOR SOLVING THE PROBLEM

Item 1. A glass member including:
a glass plate having a first surface and a second surface; and
a functional film formed on the first surface and formed of a single film,
wherein the functional film contains:
   a composition mainly disposed in a vicinity of a surface of the functional film, the composition having a fluoroalkyl group;
   an antibacterial metal ion; and
   a carrier containing an inorganic oxide constituting a three-dimensional network bond.

Item 2. The glass member according to item 1, wherein the composition has a highest concentration in the vicinity of the surface of the functional film and decreases its concentration as approaching the glass plate.

Item 3. The glass member according to item 1 or 2, wherein in the functional film, a content of the metal ion is 2 to 50% in terms of molar ratio with respect to a main component having a largest weight ratio in the inorganic oxide constituting the network bond.

Item 4. The glass member according to any one of items 1 to 3, wherein the metal ion is a monovalent or divalent copper ion.

Item 5. A method for producing a glass member, the method including:
producing a precursor liquid in which an antibacterial metal ion is added to a silicon alkoxide;
producing a solution in which a composition having a fluoroalkyl group is dissolved in a fluorine-based solvent;
mixing the solution with the precursor liquid to form a coating liquid;
applying the coating liquid to a glass plate; and
heating the glass plate to which the coating liquid is applied.

### ADVANTAGES OF THE INVENTION

The present invention can provide a glass member having a functional film that exhibits a plurality of functions in the form of a single film.

### BRIEF DESCRIPTION OF THE DRAWINGS

Fig. 1 is a sectional view illustrating an embodiment of a glass member according to the present invention.
Fig. 2 is a sectional view illustrating an example of a schematic view of a functional film in Fig. 1.
Fig. 3 is a graph showing a distribution of F elements in a functional film of Example 4.

### EMBODIMENTS OF THE INVENTION

Hereinafter, an embodiment of a glass member according to the present invention will be described with reference to the drawings. The glass member according to the present embodiment can be used for various purposes, for example, as a glass member covering an article or as a part of a structure. Examples of the article include, in addition to a typical display, various devices such as such as a mobile personal computer, a tablet personal computer, an in-vehicle device such as a car navigation system, a device having a display function with an electronic component at least in part, and a display device that does not have an electronic display function but performs some display to the outside. In addition, for example, one for showing to the outside such as a product but not is a device is also included. Examples of the structure include various structures using glass, such as a building, a case, for example, a showcase, a glass plate of a copier, and a partition member.

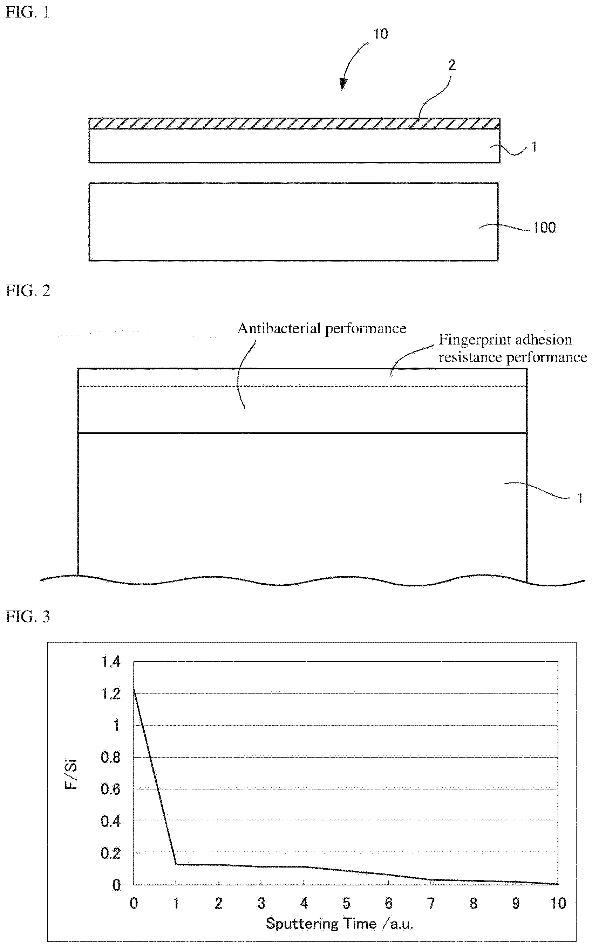

Fig. 1 is a sectional view of a glass member. As illustrated in Fig. 1, a glass member 10 according to the present embodiment includes a glass plate 1 having a first surface and a second surface, and a functional film 2 laminated on the first surface of the glass plate 1. When the glass member 10 is used as a cover member, the glass member is disposed to cover an article 100 described above. At this time, the second surface of the glass plate 1 is disposed to face the article 100, and the functional film 2 is disposed to face the outside. Details will be described below.

### <1. Glass plate>

The glass plate 1 can be formed of, for example, general-purpose soda-lime glass, borosilicate glass, aluminosilicate glass, alkali-free glass, or other glass. The glass plate 1 can be formed by a float method. With this production method, the glass plate 1 having a smooth surface can be obtained. However, the glass plate 1 may have irregularities on a main surface, and it may be, for example, a mold plate glass. The mold plate glass can be formed by a production method called a roll-out method. The mold plate glass produced by this production method usually has periodic irregularities in one direction along a main surface of the glass plate.

In the float method, molten glass is continuously supplied onto a molten metal such as molten tin, and the supplied molten glass is caused to flow on the molten metal to form a band plate. The glass thus molded is referred to as a glass ribbon.

The glass ribbon is cooled toward the downstream side, cooled and solidified, and then pulled up from the molten metal by a roller. Then, the obtained material is conveyed to an annealing furnace by a roller, slowly cooled, and then cut. A float glass plate is thus obtained.

The thickness of the glass plate 1 is not particularly limited, but is preferably thin for weight reduction. For example, it is preferably 0.3 to 5 mm, and more preferably 0.6 to 2.5 mm. This is because when the glass plate 1 is too thin, the strength decreases, and when the glass plate 1 is too thick, distortion may occur in the article 100 visually recognized through the glass member 10.

The glass plate 1 may be usually a flat plate, but it may be a curved plate. In particular, when the surface shape of a member to be protected is a non-flat surface such as a curved surface, it is preferable that the glass plate 1 has a main surface having a non-flat shape conforming to the surface shape of the member. In this case, the glass plate 1 may be curved such that the entire glass plate 1 has a constant curvature, or it may be locally curved. The main surface of the glass plate 1 may be formed by connecting a plurality of flat surfaces to each other at a curved surface, for example. The radius of curvature of the glass plate 1 may be, for example, 5000 mm or less. The lower limit of the radius of curvature may be, for example, 10 mm or more, but it may be smaller particularly in a locally curved portion, and it may be, for example, 1 mm or more.

A glass plate having the following composition may also be used.
Hereinafter, the displays with % indicating the components of the glass plate 1 all mean mol% unless otherwise specified. In the present specification, "substantially composed of" means that the total content of the listed components occupies 99.5 mass% or more, preferably 99.9 mass% or more, and more preferably 99.95 mass% or more. The phrase "does not substantially contain" means that the content of the component is 0.1 mass% or less, preferably 0.05 mass% or less.

Based on the composition (hereinafter, it may be referred to as "SL in a narrow sense" or simply "SL") of float plate glass widely used as a glass composition suitable for production of a glass plate by a float method, the inventors of the present invention have studied a composition capable of improving the chemical tempering characteristics of SL in a narrow sense while making the characteristics such as T₂ and T₄ as close to SL in a narrow sense as possible within a composition range that is regarded as a soda-lime silicate glass suitable for the float method (hereinafter, it may be referred to as "SL in a broad sense") by those skilled in the art, specifically, within the following mass% range.

| | |
|---|---|
| SiO₂ | 65 to 80% |
| Al₂O₃ | 0 to 16% |
| MgO | 0 to 20% |
| CaO | 0 to 20% |
| Na₂O | 10 to 20% |
| K₂O | 0 to 5% |

Hereinafter, each component constituting the glass composition of the glass plate 1 will be described.

### (SiO₂)

SiO₂ is a main component constituting the glass plate 1. When the content of SiO₂ is too low, chemical durability such as water resistance and heat resistance of glass deteriorate. When the content of SiO₂ is too high, the viscosity of the glass plate 1 at a high temperature becomes high, and dissolution and molding become difficult. Thus, an appropriate content of SiO₂ is in the range of 66 to 72 mol%, and a preferable content is 67 to 70 mol%.

### (Al₂O₃)

Al₂O₃ is a component for improving the chemical durability such as water resistance of the glass plate 1, further facilitating the movement of alkali metal ions in the glass to increase the surface compressive stress after chemical tempering, and increasing the depth of the stress layer. When the content of Al₂O₃ is too high, the viscosity of the glass melt increases, T₂ and T₄ increase, and the clarity of the glass melt deteriorate, which makes it difficult to produce a high-quality glass plate.

Thus, an appropriate content of Al₂O₃ is in the range of 1 to 12 mol%. The content of Al₂O₃ is preferably 10 mol% or less, and preferably 2 mol% or more.

### (MgO)

MgO is an essential component for improving the solubility of glass. From the viewpoint of sufficiently obtaining this effect, MgO is preferably added to the glass plate 1. When the content of MgO is less than 8 mol%, the surface compressive stress after chemical tempering decreases, and the depth of the stress layer tends to decrease. When the content is increased to exceed an appropriate amount, the tempering performance obtained by chemical tempering deteriorates, and in particular, the depth of the surface compressive stress layer rapidly decreases. This adverse effect is smallest in MgO among alkaline earth metal oxides, but in this glass plate 1, the content of MgO is 15 mol% or less. When the content of MgO is high, T₂ and T₄ increase, and the clarity of the glass melt deteriorates, which makes it difficult to produce a high-quality glass plate.

Thus, in the glass plate 1, the content of MgO is in the range of 1 to 15 mol%, and preferably 8 mol% or more and 12 mol% or less.

### (CaO)

CaO has an effect of reducing viscosity at a high temperature, but when the content is too high beyond an appropriate range, the glass plate 1 is likely to devitrify, and movement of sodium ions in the glass plate 1 is inhibited. When CaO is not contained, the surface compressive stress after chemical tempering tends to decrease. When CaO is contained in an amount exceeding 8 mol%, the surface compressive stress after chemical tempering remarkably decreases, the depth of the compressive stress layer remarkably decreases, and the glass plate 1 is likely to devitrify.

Thus, an appropriate content of CaO is in the range of 1 to 8 mol%. The content of CaO is preferably 7 mol% or less, and preferably 3 mol% or more.

### (SrO, BaO)

SrO and BaO greatly reduce the viscosity of the glass plate 1, and when they are contained in a small amount, the effect of reducing a liquid phase temperature T_{L} is more remarkable than CaO. However, even when only a small amount of SrO or BaO is added, the movement of sodium ions in the glass plate 1 is remarkably interrupted, the surface compressive stress greatly decreases, and the depth of the compressive stress layer considerably decreases.

Thus, the glass plate 1 preferably does not substantially contain SrO or BaO.

### (Na₂O)

Na₂O is a component for increasing the surface compressive stress and increasing the depth of the surface compressive stress layer by replacing sodium ions with potassium ions. However, when the content is increased to exceed an appropriate amount, the stress relaxation during the chemical tempering treatment exceeds the generation of the surface compressive stress due to ion exchange in the chemical tempering treatment, and as a result, the surface compressive stress tends to decrease.

In addition, Na₂O is a component for improving solubility and lowering T₄ and T₂, and on the other hand, when the content of Na₂O is too high, the water resistance of glass significantly decreases. In the glass plate 1, when the content of Na₂O is 10 mol% or more, the effect of lowering T₄ and T₂ is sufficiently obtained, and when the content of Na₂O is more than 16 mol%, reduction of surface compressive stress due to stress relaxation becomes remarkable.

Thus, an appropriate content of Na₂O in the glass plate 1 of the present embodiment is in the range of 10 to 16 mol%. The content of Na₂O is preferably 12 mol% or more and more preferably 15 mol% or less.

### (K₂O)

K₂O is a component that improves the solubility of glass, like Na₂O. In a range where the content of K₂O is low, the ion exchange rate in chemical tempering increases, the depth of the surface compressive stress layer increases, and the liquid phase temperature T_{L} of the glass plate 1 decreases. Thus, it is preferable to contain K₂O at a low content.

K₂O has a smaller effect of lowering T₄ and T₂ than Na₂O, but containing a large amount of K₂O interferes with the clarity of the glass melt. In addition, as the content of K₂O increases, the surface compressive stress after chemical tempering decreases. Thus, an appropriate content of K₂O is in the range of 0 to 1 mol%.

### (Li₂O)

Li₂O significantly reduces the depth of the compressive stress layer with a small content. In addition, when a glass member containing Li₂O is chemically tempered with a molten salt of potassium nitrate alone, the rate at which the molten salt deteriorates is significantly higher than that in the case of a glass member not containing LizO. Specifically, when the chemical tempering treatment is repeatedly performed with the same molten salt, the surface compressive stress formed on the glass surface decreases with a smaller number of times. Thus, the glass plate 1 of the present embodiment may contain 1 mol% or less of Li₂O, but it is preferable that the glass plate 1 does not substantially contain Li₂O.

### (B₂O₃)

B₂O₃ is a component that reduces the viscosity of the glass plate 1 and improves the solubility. However, when the content of B₂O₃ is too high, the glass plate 1 tends to be phase-separated, and the water resistance of the glass plate 1 deteriorates. In addition, a compound formed by B₂O₃ and the alkali metal oxide may volatilize to damage the refractory in the glass melting chamber. Further, containing B₂O₃ reduces the depth of the compressive stress layer in chemical tempering. Thus, an appropriate content of B₂O₃ is 0.5 mol% or less. In the present invention, it is more preferable that the glass plate 1 does not substantially contain B₂O₃.

### (Fe₂O₃)

Usually, Fe is present in glass in the state of Fe²⁺ or Fe³⁺ and acts as a colorant. Fe³⁺ is a component that enhances the ultraviolet absorption performance of glass, and Fe²⁺ is a component that enhances the heat ray absorption performance. When the glass plate 1 is used as a cover glass of a display, coloring is required to be inconspicuous, and thus it is preferable that the content of Fe is small. However, Fe is inevitably mixed from industrial raw materials in many cases. Thus, the content of iron oxide in terms of Fe₂O₃ is preferably 0.15 mass% or less, more preferably 0.1 mass% or less, and still more preferably 0.02 mass% or less when the entire glass plate 1 is regarded as 100 mass%.

### (TiO₂)

TiO₂ is a component that reduces the viscosity of the glass plate 1 and simultaneously increases the surface compressive stress due to chemical tempering, but it may impart yellow coloring to the glass plate 1. Thus, an appropriate content of TiO₂ is 0 to 0.2 mass%. In addition, TiO₂ is inevitably mixed from industrial raw materials usually used, and the glass plate 1 contains about 0.05 mass% of TiO₂ in some cases. The glass plate 1 is not colored with such a content, and thus TiO₂ in such a content may be contained in the glass plate 1 of the present embodiment.

### (ZrO₂)

It is known that, particularly when a glass plate is produced by a float method, ZrO₂ may be mixed into the glass plate 1 from a refractory brick constituting a glass melting furnace, and the content of ZrO₂ is about 0.01 mass%. ZrO₂ is a component that improves the water resistance of glass and increases the surface compressive stress due to chemical tempering. However, a high content of ZrO₂ may cause an increase in a working temperature T₄ and a rapid increase in the liquid phase temperature T_{L}, and in the production of a glass plate by a float method, crystals containing precipitated Zr are likely to remain as foreign matters in the produced glass. Thus, an appropriate content of ZrO₂ is 0 to 0.1 mass%.

### (SO₃)

In the float method, a sulfate such as sodium sulfate (Na₂SO₄) is widely used as a clarifying agent. The sulfate is decomposed in the molten glass to generate a gas component, which promotes defoaming of the glass melt, but a part of the gas component is dissolved and remains in the glass plate 1 as SO₃. In the glass plate 1 of the present invention, the content of SO₃ is preferably 0 to 0.3 mass%.

### (CeO₂)

CeO₂ is used as a clarifying agent. CeO₂ contributes to defoaming because CeO₂ generates O₂ gas in the molten glass. When the amount of CeO₂ is too large, the glass is colored yellow. Thus, the content of CeO₂ is preferably 0 to 0.5 mass%, more preferably 0 to 0.3 mass%, and still more preferably 0 to 0.1 mass%.

### (SnO₂)

It is known that in a glass plate formed by a float method, tin is diffused from a tin bath on a surface in contact with the tin bath during molding, and the tin is present as SnO₂. In addition, SnO₂ mixed in the glass raw material contributes to defoaming. In the glass plate 1 of the present invention, SnO₂ is preferably 0 to 0.3 mass%.

### (Other components)

The glass plate 1 according to the present embodiment is preferably substantially composed of the components listed above. However, the glass plate 1 according to the present embodiment may contain components other than the components listed above preferably in a range in which the content of each component is less than 0.1 mass%.

Examples of the component allowed to be contained include, in addition to SO₃ and SnO₂ described above, As₂O₅, Sb₂O₅, Cl, and F added for the purpose of defoaming the molten glass. However, it is preferable that As₂O₅, Sb₂O₅, Cl, and F are not added because of a large adverse effect on the environment. Other examples of the component allowed to be contained include ZnO, P₂O₅, GeO₂, Ga₂O₃, Y₂O₃, and La₂O₃. Components other than those described above derived from industrially used raw materials are acceptable as long as they do not exceed 0.1 mass%. Since these components are appropriately added as necessary or inevitably mixed, the glass plate 1 of the present embodiment may substantially contain none of these components.

### (Density (specific gravity): d)

With the composition described above, in the present embodiment, the density of the glass plate 1 can be reduced to 2.53 g·cm⁻³ or less, further 2.51 g·cm⁻³ or less, and in some cases 2.50 g·cm⁻³ or less.

In the float method or the like, when the difference in density between glass varieties is large, molten glass having a higher density is retained at the bottom of the melting furnace when the glass variety to be produced is switched, and there is a case where switching of the variety is interrupted. The density of soda lime glass that is currently mass-produced by a float method is about 2.50 g·cm⁻³. Thus, in consideration of mass production by a float method, the density of the glass plate 1 is close to the above value, specifically, preferably 2.45 to 2.55 g·cm⁻³, particularly preferably 2.47 to 2.53 g·cm⁻³, and further preferably 2.47 to 2.50 g·cm⁻³.

### (Elastic modulus: E)

When chemical tempering involving ion exchange is performed, warpage may occur in the glass substrate. The elastic modulus of the glass plate 1 is preferably high to prevent this warpage. According to the present invention, the elastic modulus (Young's modulus: E) of the glass plate 1 can be increased to 70 GPa or more, and further to 72 GPa or more.

Hereinafter, the chemical tempering of the glass plate 1 will be described.

### (Conditions for chemical tempering and compressive stress layer)

Chemical tempering of the glass plate 1 according to the present invention can be performed by bringing the glass plate 1 containing sodium into contact with a molten salt containing a monovalent cation having an ionic radius larger than that of a sodium ion, preferably a potassium ion, and performing an ion exchange treatment of replacing a sodium ion in the glass plate 1 with the monovalent cation. This forms a compressive stress layer to which a compressive stress is applied on the surface.

Examples of the molten salt typically include potassium nitrate. A mixed molten salt of potassium nitrate and sodium nitrate may also be used, but since it is difficult to control the concentration of a mixed molten salt, a molten salt of potassium nitrate alone is preferable.

The surface compressive stress and the depth of the compressive stress layer in a tempered glass member can be controlled not only by the glass composition of the article but also by the temperature of the molten salt in the ion exchange treatment and the treatment time.

By bringing the glass plate 1 described above into contact with potassium nitrate molten salt, it is possible to obtain a tempered glass member having a very high surface compressive stress and a very deep compressive stress layer. Specifically, it is possible to obtain a tempered glass member having a surface compressive stress of 700 MPa or more and a depth of a compressive stress layer of 20 µm or more, and it is also possible to obtain a tempered glass member having a depth of a compressive stress layer of 20 µm or more and a surface compressive stress of 750 MPa or more.

When the glass plate 1 having a thickness of 3 mm or more is used, not chemical tempering but air-quench tempering can be used as a typical tempering method.

### <2. Functional film>

Next, the functional film 2 will be described with reference to Fig. 2. Fig. 2 is an enlarged sectional view schematically illustrating the vicinity of the surface of the functional film. The functional film 2 includes an inorganic oxide constituting a three-dimensional network bond, a composition having a fluoroalkyl group (hereinafter, it may be referred to as a fluorine-containing composition) held in the inorganic oxide, and an antibacterial metal ion held in the inorganic oxide. These will be described below.

### <2-1. Inorganic oxide>

The inorganic oxide serves as a carrier that holds inorganic oxide fine particles and metal ions. The inorganic oxide preferably contains, for example, silicon oxide which is an oxide of Si and contains silicon oxide as a main component. The inorganic oxide containing silicon oxide as a main component is suitable for reducing the refractive index of the film and reducing the reflectance of the film. The functional film 2 may contain a component other than silicon oxide or may contain a component partially containing silicon oxide.

The component partially containing silicon oxide forms, for example, a three-dimensional network structure of siloxane bonds (Si-O-Si) in which silicon atoms and oxygen atoms are alternately connected and spread in a three-dimensional manner. In addition, the component partially containing silicon oxide is a component in which an atom other than a silicon atom or an oxygen atom, a functional group, or the like is bonded to a silicon atom or an oxygen atom of this portion. Examples of the atom other than a silicon atom or an oxygen atom include a nitrogen atom, a carbon atom, a hydrogen atom, and a metal element described in the next paragraph. Examples of the functional group include an organic group described as R in the next paragraph. Such a component is not strictly silicon oxide in that it is not composed only of silicon atoms and oxygen atoms. However, in describing the characteristics of the functional film 2, it is appropriate to treat a silicon oxide portion composed of a silicon atom and an oxygen atom as "silicon oxide", which is also common in the field. In the present specification, the silicon oxide portion is also treated as silicon oxide. As is clear from the above description, the atomic ratio between silicon atoms and oxygen atoms in silicon oxide does not have to be stoichiometric (1 : 2).

The functional film 2 may contain an inorganic oxide other than silicon oxide, specifically, an inorganic oxide component or an inorganic oxide portion containing an inorganic component other than silicon. The inorganic oxide that may be contained in the functional film 2 is not particularly limited, but it is, for example, an oxide of at least one metal element selected from the group consisting of Al, Ti, Zr, Ta, Nb, Nd, La, Ce, and Sn. The functional film 2 may contain an inorganic compound component other than an oxide, for example, a nitride, a carbide, or a halide, or may contain an organic compound component.

The inorganic oxide such as silicon oxide can be formed from a hydrolyzable organometallic compound. Examples of the hydrolyzable silicon compound include a compound represented by Formula (1).

RₙSiY₄₋ₙ (1)

R is an organic group containing at least one selected from an alkyl group, a vinyl group, an epoxy group, a styryl group, a methacryloyl group, and an acryloyl group. Y is at least one hydrolyzable organic group selected from an alkoxy group, an acetoxy group, an alkenyloxy group, and an amino group, or a halogen atom. The halogen atom is preferably Cl. n is an integer from 0 to 3, preferably 0 or 1.

As R, an alkyl group, for example, an alkyl group having 1 to 3 carbon atoms, in particular, a methyl group is suitable. As Y, an alkoxy group, for example, an alkoxy group having 1 to 4 carbon atoms, in particular, a methoxy group and an ethoxy group are suitable. Two or more compounds represented by the above formula may be used in combination. Examples of such a combination include a combination of tetraalkoxysilane in which n is 0 and monoalkyltrialkoxysilane in which n is 1.

A preferred specific example of the silicon compound having a hydrolyzable group represented by Formula (1) is a silicon alkoxide in which X in Formula (1) is an alkoxyl group. The silicon alkoxide more preferably contains a tetrafunctional silicon alkoxide corresponding to the compound (SiX₄) in which m = 0 in Formula (1). Specific examples of the tetrafunctional silicon alkoxide include tetramethoxysilane and tetraethoxysilane. The silicon alkoxide may be used alone or in combination of two or more types, and when two or more types are used in combination, the main component of the silicon alkoxide is more preferably a tetrafunctional silicon alkoxide.

The compound represented by Formula (1) forms a network structure in which silicon atoms are bonded to each other via an oxygen atom after hydrolysis and polycondensation. In this structure, the organic group represented by R is contained in a state of being directly bonded to a silicon atom.

### <2-2. Fluorine-containing composition>

The composition having a fluoroalkyl group is a composition having a C-F bond and exhibits water repellency. It is also a substance that exhibits oil repellency due to its structure. Specific examples thereof include a polymer (fluoroalkylsilane) having a structure based on a compound represented by the following Formula (2).

CF₃ - (CF₂)ₙ - CH₂ - CH₂ - Si (O-CH₃)₃ (2)

(n is a natural number of 1 or more, and usually, n is 3 to 11.)

In the case of a substance having a fluoroalkylsilane group, a group on the terminal Si side and a silicon alkoxide group of Formula (1) can react to form a Si-O-Si bond. This allows the composition having a fluoroalkyl group to be present in the functional film 2.

However, the "composition having a fluoroalkyl group" is not limited to the composition, and the following compositions may be used.

C having a C-F bond does not have to be bonded only to an F atom but may be bonded to a hydrogen atom, a chlorine atom, a bromine atom, an iodine atom, a CFX¹X² group (X¹ and X² are the same or different, and are a hydrogen atom, a fluorine atom, or a chlorine atom), a cyano group, a linear or branched fluoroalkyl group having 1 to 6 carbon atoms, a substituted or unsubstituted benzyl group, a substituted or unsubstituted phenyl group, or a linear or branched alkyl group having 1 to 20 carbon atoms. When X is an alkyl group having 3 or more carbon atoms, these may be either cyclic or acyclic, and the number of carbon atoms is preferably 1 to 10, more preferably 1 to 6, and still more preferably 1 to 2. When X is a fluoroalkyl group, these may be cyclic or acyclic. The number of carbon atoms in each of the alkyl group and the fluoroalkyl group is preferably 1 to 6, more preferably 1 to 4, and still more preferably 1 to 2.

The "composition having a fluoroalkyl group" may contain an ether bond or a ketone group in the carbon chain, and it may be an acrylate. Alternatively, there may be a double or triple bond in the carbon chain.

As specific examples containing an acrylate, for example, acrylic acid esters disclosed in General Formula (6) of WO 2016/056663 A [Chemical Formula 7] can be widely mentioned. Of these, from the viewpoint of excellent water repellency and oil repellency, examples of the compound represented by General Formula (6) include a combination in which X is a hydrogen atom or a fluorine atom, Y is an alkylene group having 1 to 10 carbon atoms (preferably, an alkylene group having 1 to 6 carbon atoms, and more preferably an alkylene group having 1 to 2 carbon atoms), and R is a linear or branched alkyl group having 2 to 20 carbon atoms, a linear or branched fluoroalkyl group having 2 to 6 carbon atoms, or a polyether group or a fluoropolyether group having a molecular weight of 400 to 5000. More preferable examples of the compound represented by General Formula (6) include a linear or branched fluoroalkyl group in which X is a hydrogen atom, Y is an alkylene group having 1 to 2 carbon atoms, and R is a fluoroalkyl group having 2 to 6 carbon atoms.

Specific examples of the compound represented by General Formula (6) include fluoroalkyl (meth)acrylates having a fluoroalkyl group having 1 to 6 carbon atoms.

When the fluorine-containing composition contains a polymer having a structural unit based on the compound represented by General Formula (6), the structural unit based on the compound represented by General Formula (6) contained in the polymer may be either one type alone or two or more types.

The molecular weight of the fluorine-containing composition is not particularly limited, and it may be, for example, in a range of a mass average molecular weight to an extent formed by known radical polymerization. The fluorine-containing composition may be a homopolymer formed of a single structural unit or a copolymer formed of two or more structural units. In the case of a copolymer, the copolymer may be in any form such as a random copolymer or a block copolymer.

The fluorine-containing composition may be formed only of a polymer having a structural unit based on the compound represented by General Formula (6), or may have a structural unit other than the structural unit based on the compound represented by General Formula (6). The total content of the structural unit based on the compound represented by General Formula (6) contained in the fluorine-containing composition is, for example, 50 mass% or more, preferably 80 mass% or more, more preferably 90 mass% or more, and particularly preferably 99 mass% or more.

The content of the fluorine-containing composition in the functional film 2 is preferably 10 to 40% and more preferably 20 to 30% in terms of weight ratio with respect to the main component having the largest weight ratio in the inorganic oxide constituting the network bond.

### <2-3. Metal ion>

The metal ions have antibacterial properties and can be formed of monovalent or divalent copper ions, silver ions, or the like. The content of metal ions in the functional film 2 is preferably 2 to 50% and more preferably 5 to 25% in terms of molar ratio with respect to the main component having the largest weight ratio in the inorganic oxide constituting the network bond.

### <2-4. Film thickness of functional film>

The thickness of the functional film 2 is, for example, preferably 10 to 300 nm, and more preferably 20 to 150 nm. When the thickness is too large, the haze ratio may increase or excessive coloring may occur. In addition, the strength of the film-coated substrate may decrease. When the thickness is too small, metal ions cannot be held, and there is a possibility that the metal ions separate from the functional film 2.

### <2-5. Method for forming functional film>

The method for forming the functional film 2 is not particularly limited, but for example, the functional film 2 may be formed as follows. First, a material constituting the above-described three-dimensional network structure, for example, a silicon alkoxide such as tetraethoxysilane is used as an alcohol solution under acidic conditions to produce a precursor liquid. In addition, a liquid containing the above-described antibacterial metal ions, for example, a dispersion containing an aqueous copper chloride solution or an aqueous copper nitrate solution is mixed with the precursor liquid. In addition, a solution obtained by dissolving a liquid containing the fluorine-containing composition described above in a fluorine-based solvent is mixed with the precursor liquid. The fluorine-based solvent is preferably a liquid that dissolves in a solvent such as alcohol. A coating liquid for the functional film is thus produced. Various additives may also be mixed as necessary. For example, a dispersion containing inorganic oxide fine particles such as colloidal silica may be added or boron may be added as boric acid. For example, when boron remains in the functional film 2, boron (BO⁻) has an effect of attracting antibacterial copper ions, and thus it is possible to prevent copper ions from aggregating to form crystals such as copper oxide.

Next, the coating liquid is applied to the first surface of the cleaned glass plate 1. The coating method is not particularly limited, but for example, a flow coating method, a spray coating method, a spin coating method, or the like may be adopted. Thereafter, the applied coating liquid is dried at a predetermined temperature (for example, 80 to 300°C), for example, to volatilize the alcohol content in the solution, and then sintered at a predetermined temperature (for example, 200 to 500°C), for example, to hydrolyze and decompose the organic chain, whereby the functional film 2 can be obtained.

In this process, as the functional film 2 is dried, water, a solvent such as alcohol, and a fluorine-based solvent evaporate. Then, the hydrophobic fluorine-containing composition having affinity via the fluorine-based solvent or alcohol loses affinity while the hydrophilic glass plate 1 or the above-described three-dimensional network structure is formed, and gathers in the vicinity of the surface of the functional film 2. When the functional film 2 is cured, the fluorine-containing composition is contained in the vicinity of the surface of functional film 2. In the same manner, when the "composition having a fluoroalkyl group" having a Si group forms a bond with a silicon alkoxide, the fluoroalkyl group side is present in a large amount in the vicinity of the surface of the functional film 2. More specifically, the fluorine-containing composition has a highest concentration in the vicinity of the surface of the functional film 2 and decreases its concentration as approaching the glass plate 1. When the concentration of the fluorine-containing composition increases in the vicinity of the surface of the functional film 2 like this, the antibacterial metal ions are relatively contained mainly on the glass plate 1 side, but the ions are also present in the vicinity of the surface. Thus, as illustrated in Fig. 2, although the functional film 2 is a single film, the functional film 2 exhibits two functions. The ratio of F to Si in the functional film 2 is preferably 0.7 or more, and more preferably 1.0 or more.

### <3. Optical characteristics of glass member>

As the optical characteristics of the glass member 10, for example, the visible light transmittance is preferably 85% or more, and more preferably 90% or more. The haze ratio of the glass member 10 may be, for example, 20% or less, further 15% or less, particularly 10% or less, and may be 0.1 to 8.0% or 0.1 to 6.0% in some cases.

### <4. Features>

(1) In the glass member 10 according to the present embodiment, the functional film 2 includes an inorganic oxide constituting a three-dimensional network bond and an antibacterial metal ion held by the inorganic oxide, and the inorganic oxide serves as a carrier that holds the metal ion. Thus, elution of the metal ion can be prevented.
(2) As illustrated in Fig. 2, the functional film 2 is formed of a single film, but the fluorine-containing composition is unevenly distributed mainly in the vicinity of the surface, and the antibacterial metal ions are unevenly distributed mainly in the vicinity of the surface of the glass plate. Thus, there is an advantage that the single film exhibits two functions. That is, since the fluorine-containing composition is unevenly distributed in the vicinity of the surface, fingerprint adhesion resistance performance, antifouling performance, water repellency performance, and the like can be exhibited. On the other hand, since the functional film 2 contains an antibacterial metal ion, antibacterial performance can be exhibited. In Fig. 2, a boundary is indicated by a dotted line between the fingerprint adhesion resistance performance region and the antibacterial performance region, but this is for convenience of description. Since the functional film 2 is a single film, there is no interface between the two functional regions.

Antibacterial metal ions present on the surface of the functional film 2 can be eluted out of the film by moisture on the surface side (in the atmosphere). This is because even when a layer of a fluoroalkyl group is present in the vicinity of the surface of the functional film 2, the metal ions can pass through the layer, and the ions are easily associated with moisture. In addition, since the metal ions can move to the surface side in the film, even when the metal ions are released outside the film, the metal ions remaining in the film move to the surface side, and thus the antibacterial performance is maintained. In particular, since the functional film 2 of the present embodiment is a single film having no interface, it is considered that such movement of metal ions is easier as compared with a multilayer film.

(3) When the amount of the fluorine-containing composition in the film of the functional film 2 is reduced, a decrease in hardness of the functional film 2 can be prevented. That is, since the fluoroalkyl group contained in the fluorine-containing composition does not bind to SiO₂, for example, when the number of fluoroalkyl groups in the functional film 2 increases, the hardness of the functional film 2 decreases.
Thus, when the concentration of the fluorine-containing composition in the vicinity of the surface of the functional film 2 increases as described above, a reduction in hardness of the functional film 2 can be prevented.

(4) As described above, since the functional film 2 is formed by one coating liquid although exhibiting two functions, it is easy to produce the glass member 10.

### EXAMPLES

Hereinafter, Examples of the present invention will be described. The present invention is not limited to the following Examples.

### (1) Preparation of Examples

A float glass plate having a size of 50 mm × 50 mm and a thickness of 1.1 mm was prepared, and the surface thereof was subjected to alkaline ultrasonic cleaning. Next, coating liquids for functional films having the compositions of Examples 1 to 3 shown below were prepared. The concentration of the solid content in the coating liquid was set to 0.5 mass%. Novec 7200 is a fluorine-based solvent manufactured by 3M Company, P-7 is an alcohol solvent manufactured by Japan Alcohol Trading Co., Ltd., and Optool UD120 is a fluorine-containing composition manufactured by Daikin Industries, Ltd.

**[Table 1]**

| | Total amount (g) | Novec 7200 (wt%) | Undiluted liquid addition amount (g) | P-7 (wt%) | Addition amount (g) | PGME (wt%) | Addition amount (g) | HNO3 (wt%) | Undiluted liquid addition amount (g) |
|---|---|---|---|---|---|---|---|---|---|
| Example 1 | 65.0 | 46.9 | 30.48 | 24.9 | 15.05 | 25.0 | 16.25 | 0.50 | 0.33 |
| Example 2 | 65.0 | 47.1 | 30.60 | 24.9 | 15.57 | 25.0 | 16.25 | 0.50 | 0.33 |
| Example 3 | 65.0 | 46.7 | 30.35 | 24.9 | 14.54 | 25.0 | 16.25 | 0.50 | 0.33 |

**[Table 2]**

| | C_{U}(NO₃)₂ 3H₂O (mol%) | P-7 diluted liquid concentration (wt%) | Addition amount (g) | B(OH)₃ (mol%) | 5 wt% P-7 liquid addition amount (g) | High-purity ethyl orthosilicate (wt% SiO₂) | Undiluted liquid addition amount (g) | Optool UD120 (wt%) | Undiluted liquid addition amount (g) |
|---|---|---|---|---|---|---|---|---|---|
| Example 1 | 20.0 | 20 | 128 | 1.5 | 0.10 | 0.50 | 1.13 | 0.120 | 0.39 |
| Example 2 | 10.0 | 20 | 0.64 | 1.5 | 0.10 | 0.50 | 1.13 | 0.120 | 0.39 |
| Example 3 | 30.0 | 20 | 1.92 | 1.5 | 0.10 | 0.50 | 1.13 | 0.120 | 0.39 |

The coating liquids described above were applied to a glass plate by spray coating. The temperature and humidity at the time of application were 22°C and 87%. Thereafter, the film was temporarily dried at 300°C for 100 seconds, and then heated at 200°C for 30 minutes. A functional film was thus formed on the glass plate. The thickness of the functional film was about 50 nm. The composition of the functional film of the completed glass member is as follows. The unit is mass%.

**[Table 3]**

| | | | | |
|---|---|---|---|---|
| | SiO₂ (carrier) | Fluorine-containing comosition | Cu | B₂O₃ |
| Example 1 | 68.7 | 16.5 | 14.2 | 0.6 |
| Example 2 | 74.0 | 17.8 | 7.6 | 0.6 |
| Example 3 | 64.1 | 15.4 | 19.9 | 0.6 |

### (2) Evaluation

The glass members of Examples 1 to 3 were subjected to the following test.

### (2-1) Contact angle

In each of Examples 1 to 3, five samples were prepared, and the static contact angle of the functional film was measured. The measurement method was a liquid method. The results are as follows, and the average of the five samples was calculated. When the contact angle is 100° or more, fingerprint resistance performance, water repellency performance, antifouling performance and the like are exhibited, and thus it can be said that Examples 1 to 3 have fingerprint resistance performance. In particular, it has been found that the contact angle increases when the content of the fluorine-containing composition is large.

**[Table 4]**

| | |
|---|---|
| | Contact angle |
| Example 1 | 114.5° |
| Example 2 | 114.3° |
| Example 3 | 114.3° |

### (2-2) Elution test

The glass members according to Examples 1 to 3 were immersed in 25 ml of purified water at 25°C, and the relationship of the elution amount of copper after 24 hours was calculated. The elution amount was calculated as follows. First, the test water whose color is developed with PACKTEST Copper (manufactured by KYORITSU CHEMICAL-CHECK Lab., Corp.) was measured with Digital PACKTEST Copper (the same as above), the concentration of copper ions contained in the liquid was determined, and then the concentration was converted into mass% with respect to copper contained in the functional film before the test. The results are as shown in Table 5.

**[Table 5]**

| | Elution amount of copper |
|---|---|
| Example 1 | 50% |
| Example 2 | 64% |
| Example 3 | 38% |

As shown in Table 5, it can be seen that the elution amount of copper is substantially proportional to the addition amount of copper nitrate. Further, the inventors of the present invention have confirmed that the antibacterial activity of the glass member of Examples 1 to 3 is 2.5 or more in a test of antibacterial activity (corresponding to ISO22916) based on JIS Z 2801:2012 (film adhesion method). When the antibacterial activity is 2.0 or more, the film is considered to have antibacterial performance.

### (2-3) Distribution of fluorine in functional film

A coating liquid according to Example 4 in which the same amount of tridecafluorooctyltrichlorosilane was added instead of the Optool UD 120 in Example 3 was prepared, and a glass member according to Example 4 was produced. The functional film of Example 4 was subjected to XPS analysis. The results are as shown in Fig 3. In the graph of Fig. 3, the horizontal axis represents the sputtering time and corresponds to the film thickness of the functional film (the position of 10 roughly corresponds to the boundary between the functional film and the glass plate). F/Si on the vertical axis is the ratio of the F element to the Si element. As shown in the drawing, it can be seen that the content of F elements in the functional film is the highest in the vicinity of the surface of the functional film, and the amount of F elements decreases as approaching the glass plate. That is, it can be seen that the fluorine-containing composition has a highest concentration in the vicinity of the surface of the functional film and decreases its concentration as approaching the glass plate. Thus, it can be seen that fingerprint resistance performance is strongly exhibited in the vicinity of the surface of the functional film.

### DESCRIPTION OF REFERENCE SIGNS

1: Glass plate
2: Functional film
10: Glass member
100: Article

## Claims

1. A glass member comprising:
a glass plate having a first surface and a second surface; and
a functional film formed on the first surface and formed of a single film,
wherein the functional film contains:
a composition mainly contained in a vicinity of a surface of the functional film, the composition having a fluoroalkyl group;
an antibacterial metal ion; and
a carrier containing an inorganic oxide constituting a three-dimensional network bond.

2. The glass member according to claim 1, wherein the fluorine-containing composition has a highest concentration in the vicinity of the surface of the functional film and decreases its concentration as approaching the glass plate.

3. The glass member according to claim 1 or 2, wherein in the functional film, a content of the metal ion is 2 to 50% in terms of molar ratio with respect to a main component having a largest weight ratio in the inorganic oxide constituting the network bond.

4. The glass member according to any one of claims 1 to 3, wherein the metal ion is a monovalent or divalent copper ion.

5. A method for producing a glass member, the method comprising:
producing a precursor liquid in which an antibacterial metal ion is added to a silicon alkoxide;
producing a solution in which a composition having a fluoroalkyl group is dissolved in a fluorine-based solvent;
mixing the solution with the precursor liquid to form a coating liquid;
applying the coating liquid to a glass plate; and
heating the glass plate to which the coating liquid is applied.
